# DEMANDE DE BREVET EUROPEEN

(11) **EP 1 195 575 A1**
(43) Date de publication de la demande: **10.04.2002**
(21) Numéro de dépôt: 01402559.7
(22) Date de dépôt: 04.10.2001
(51) Int. Cl.: G01B 11/00

(54) **Dispositif et procédé de détermination de coordonnées surfacique et leurs utilisations et procédé de positionnement d'un ensemble emetteur laser-récepteur**

(30) Priorité: 04.10.2000 FR 0012670
(71) Demandeur: Senee, Laurent, 75950 Scionzier (FR)
(72) Inventeur: Senee, Laurent, 75950 Scionzier (FR)
(74) Mandataire: Nicolle, Olivier

(57) **Abrégé**

L'invention prévoit un émetteur (17) laser, apte à émettre un rayon laser vers le point (P) de la surface de l'objet (O), un récepteur (18) photosensible apte à transformer le rayon laser réfléchi par l'objet (O) et reçu en une grandeur représentative de la coordonnée (C) à mesurer, des moyens (10, 11, 12, 6, 16a) pour déplacer d'une manière réglable l'ensemble émetteur (17) laser - récepteur (18) photosensible et l'objet (O) à mesurer, et des moyens (22) de calcul de la coordonnée (C) en fonction de la grandeur et de la position (R) de réglage des moyens (10, 11, 12, 6, 16a) de déplacement.

## Description

L'invention concerne un dispositif et un procédé pour déterminer au moins une coordonnée d'au moins un point de la surface d'un objet, ainsi que des utilisations de ceux-ci.

L'invention concerne également un procédé de positionnement d'un ensemble émetteur laser - récepteur destiné à déterminer au moins une coordonnée d'au moins un point de la surface d'un objet dans un espace à trois dimensions.

L'invention s'applique notamment au contrôle métrologique dimensionnel de précision, mais aussi à la fabrication d'objets en série dont les dimensions doivent rester fidèles à des valeurs précises et au copiage de formes.

Les applications de ce type nécessitent une mesure à la fois fiable et rapide pour chaque objet. En effet, le temps de mesure doit être multiplié par le nombre de points de l'objet dont la coordonnée doit être mesurée et par le nombre d'objets dont des dimensions sont à mesurer.

On connaît une mesure par contact mécanique d'une bille roulant sur l'objet à mesurer. Cette mesure peut être précise mais prend au moins plusieurs heures.

Actuellement, la mesure de coordonnées de surfaces gauches pose problème avec les moyens classiques, en raison notamment des difficultés d'accès à certaines parties de l'objet pour la mesure.

En outre, une précision de mesure micrométrique ou submicrométrique est exigée pour certains objets.

L'invention vise à pallier les inconvénients de l'état de la technique et à obtenir une mesure précise, fiable et rapide de la coordonnée d'un point de la surface d'un objet.

Suivant un premier aspect de l'invention, il est prévu un dispositif de mesure de la coordonnée d'au moins un point de la surface d'un objet, comportant :
- des premiers moyens de support d'un objet,
- au moins un émetteur laser, apte à émettre au moins un rayon laser vers le point de la surface de l'objet,
- au moins un récepteur photosensible orienté vers l'objet et apte à transformer le rayon laser réfléchi par l'objet ou passé par celui-ci et reçu en une grandeur représentative d'une dimension,
- des deuxièmes moyens de support de l'émetteur laser et du récepteur photosensible,
- des moyens pour déplacer d'une manière réglable l'ensemble émetteur laser - récepteur photosensible d'une part et l'objet d'autre part l'un par rapport à l'autre,
- des moyens de calcul de la coordonnée du point de la surface de l'objet en fonction de la grandeur fournie par le récepteur et de la position de réglage des moyens de déplacement.

Ce dispositif permet d'effectuer des mesures de coordonnées de manière précisément reproductible et répétitive, notamment d'un grand nombre d'objets à surfaces gauches, tout en diminuant le temps pour ce faire.

Afin de pouvoir balayer de manière rationnelle la surface de l'objet à mesurer, les moyens de déplacement sont aptes, suivant une caractéristique de l'invention, à régler la position de l'ensemble émetteur laser - récepteur photosensible suivant trois directions orthonormées et comprennent un goniomètre pour le réglage en position de l'objet à mesurer autour de deux axes orthogonaux par rapport au bâti.

Suivant une autre caractéristique de l'invention, il est prévu des moyens pour régler la position angulaire de l'ensemble émetteur laser - récepteur photosensible autour d'un axe de rotation par rapport au bâti.

Le fait que les axes de réglage angulaire du goniomètre sont concourants en un même centre permet de simplifier les moyens de calcul.

Dans un mode de réalisation, le récepteur photosensible comprend une diode photosensible dont la zone de réception de rayonnement laser possède une étendue suffisante pour être balayée par le rayon laser réfléchi ou passé par l'objet à mesurer et fournissant en sortie une différence de potentiel ou de courant électrique fonction du rayonnement reçu dans la zone de réception.

Dans une première variante de l'invention, l'ensemble émetteur laser-récepteur photosensible est agencé de manière que l'incidence du rayon laser sur le point de la surface de l'objet possède une composante parallèle à la direction suivant laquelle la coordonnée doit être déterminée et que le récepteur photosensible reçoive le rayon laser réfléchi par l'objet.

Dans une deuxième variante de l'invention, l'ensemble émetteur laser-récepteur photosensible est agencé de manière que l'incidence du rayon laser sur le point de la surface de l'objet possède une composante orthogonale à la direction suivant laquelle la coordonnée de l'objet doit être déterminée et que le récepteur photosensible reçoive le rayon laser passé par l'objet.

Afin de mesurer la coordonnée d'un ensemble de points de la surface de l'objet, les moyens de calcul comprennent une unité de traitement apte à commander en continu des positions de réglages des moyens de déplacement, à recueillir en continu la grandeur fournie par le récepteur et à calculer à partir de ces positions de réglage et des grandeurs fournies une coordonnée de point de la surface de l'objet pour chaque réglage.

Pour une plus grande rapidité de calcul, une mémoire est prévue entre le récepteur photosensible et l'unité de traitement pour stocker les grandeurs fournies par le récepteur photosensible.

Suivant un deuxième aspect de l'invention, il est prévu un procédé de détermination d'au moins une coordonnée d'au moins un point de la surface d'un objet, dans lequel
- on règle d'une manière prescrite la position l'un par rapport à l'autre d'un ensemble émetteur laser - récepteur photosensible d'une part et de l'objet à mesurer d'autre part,
- on émet au moins un rayon laser vers le point de la surface de l'objet par l'émetteur laser,
- on transforme par un récepteur photosensible orienté vers l'objet le rayon laser réfléchi ou passé par l'objet et reçu en une grandeur représentative d'une dimension,
- on calcule la coordonnée du point de la surface de l'objet en fonction de la grandeur représentative et de la position de réglage prescrite l'un par rapport à l'autre de l'ensemble émetteur laser - récepteur photosensible d'une part et de l'objet à mesurer d'autre part.

Suivant une caractéristique de l'invention, l'on étalonne au préalable le récepteur photosensible afin de déterminer sa courbe de dimension correspondant à la grandeur fournie par celui-ci. Ceci permet de calculer automatiquement la coordonnée.

Suivant une autre caractéristique de l'invention, l'on règle la position de l'ensemble émetteur laser - récepteur photosensible suivant trois directions orthonormées ainsi que sa position angulaire autour d'un axe de rotation et l'on règle la position angulaire de l'objet à mesurer autour de deux axes orthogonaux.

Dans une première variante de l'invention, l'on oriente l'ensemble émetteur laser - récepteur photosensible de manière que l'incidence du rayon laser sur le point de la surface de l'objet possède une composante parallèle à la direction suivant laquelle la coordonnée de l'objet doit être déterminée et que le récepteur photosensible reçoive le rayon laser réfléchi par l'objet.

Dans une deuxième variante de l'invention, l'on oriente l'ensemble émetteur laser - récepteur photosensible de manière que l'incidence du rayon laser sur le point de la surface de l'objet possède une composante orthogonale à la direction suivant laquelle la coordonnée de l'objet doit être déterminée et que le récepteur photosensible reçoive le rayon laser passé par l'objet.

Afin de déterminer la coordonnée d'un ensemble de points de la surface de l'objet, l'on commande en continu les positions de réglage l'un par rapport à l'autre de l'ensemble émetteur laser - récepteur photosensible et de l'objet à mesurer, on recueille en continu la grandeur fournie par le récepteur et on calcule à partir de ces positions de réglage et des grandeurs fournies une coordonnée d'un point de la surface de l'objet pour chaque réglage.

Suivant une caractéristique de l'invention, l'on stocke les grandeurs fournies par le récepteur photosensible avant le calcul de la coordonnée de l'objet.

L'invention prévoit également l'utilisation d'un dispositif de mesure ou d'un procédé de mesure mentionnés ci-dessus pour déterminer la surface-enveloppe d'un objet.

Dans une autre application de l'invention, il est prévu l'utilisation d'un dispositif de mesure ou d'un procédé de mesure mentionnés ci-dessus pour vérifier que la surface d'un objet reste entre deux surfaces - enveloppes définies par des tolérances dimensionnelles.

Une autre application de l'invention prévoit l'utilisation d'un dispositif de mesure ou d'un procédé de mesure mentionnés ci-dessus pour usiner une pièce à partir de coordonnées fournies au préalable par le dispositif ou le procédé.

Une autre application de l'invention prévoit l'utilisation d'un dispositif de mesure ou d'un procédé de mesure mentionnés ci-dessus pour réaliser un moule d'une pièce ayant des coordonnées fournies au préalable par le dispositif ou le procédé.

Suivant un troisième aspect de l'invention, il est prévu un procédé de positionnement d'un ensemble émetteur laser- récepteur.

En effet, un faisceau laser se comporte comme un ensemble de « fibres » lumineuses et, dans les applications métrologiques précédemment décrites, seul un nombre restreint de ces fibres sont actives, c'est à dire participent au relevé des coordonnées désirées.

Dans un faisceau laser, on peut donc isoler une sorte de sous-faisceau actif, l'axe longitudinal du sous-faisceau étant parallèle à l'axe longitudinal du faisceau principal mais ces deux axes sont aléatoirement décalé l'un par rapport à l'autre.

Ceci induit une erreur constante dans les mesures (la distance séparant les deux axes évoqués), à laquelle il est possible de remédier en déterminant la position du sous-faisceau actif à l'intérieur d'un faisceau laser, puis en positionnant l'ensemble émetteur laser - récepteur de manière à tenir compte du décalage entre les axes du faisceau principal et du sous-faisceau actif.

A cet effet, l'invention propose un procédé de positionnement d'un ensemble émetteur laser - récepteur destiné à déterminer au moins une coordonnée d'au moins un point de la surface d'un objet dans un espace à trois dimensions (X, Y, Z), et comprenant les étapes suivantes :
a) prévoir au moins une portion de sphère d'un objet de référence ;
b) placer l'émetteur laser et le récepteur à un endroit choisi ;
c) faire parcourir au spot laser un arc de cercle en déplaçant le faisceau laser suivant l'axe X tout en faisant l'acquisition de coordonnées de points régulièrement échantillonnée sur le parcours dudit spot ;
d) déterminer l'équation d'un cercle théorique correspondant à l'ensemble des points échantillonnés ;
e) déterminer les coordonnées du point théorique Z1 correspondant au point du cercle théorique ayant une coordonnée selon l'axe Z maximale ;
f) répéter les étapes c) à e) en déplaçant le faisceau laser suivant l'axe Y et en faisant passer le spot laser sur le point théorique Z1, ceci afin de déterminer les coordonnées d'un point théorique Z2 formant le point le plus élevé en Z de l'objet de référence ;
g) positionner l'ensemble émetteur laser - récepteur en tenant compte de Z2 et des déplacements du faisceau laser pour déterminer Z2.

L'invention sera mieux comprise à la lumière des dessins annexés, donnés uniquement à titre d'exemples, sur lesquels :
- la figure 1 est une vue schématique en perspective d'un dispositif de mesure suivant l'invention ;
- la figure 2 est un synoptique modulaire de la logique de commande du dispositif de mesure selon la figure 1 ;
- la figure 3 est une vue schématique d'une variante du dispositif de mesure selon l'invention ;
- la figure 4 est une vue schématique d'une section de faisceau laser ;
- la figure 5 est un schéma représentant l'une des étapes du procédé de positionnement selon l'invention ;
- la figure 6 est un schéma représentant une autre étape du prod=cédé de positionnement selon l'invention.

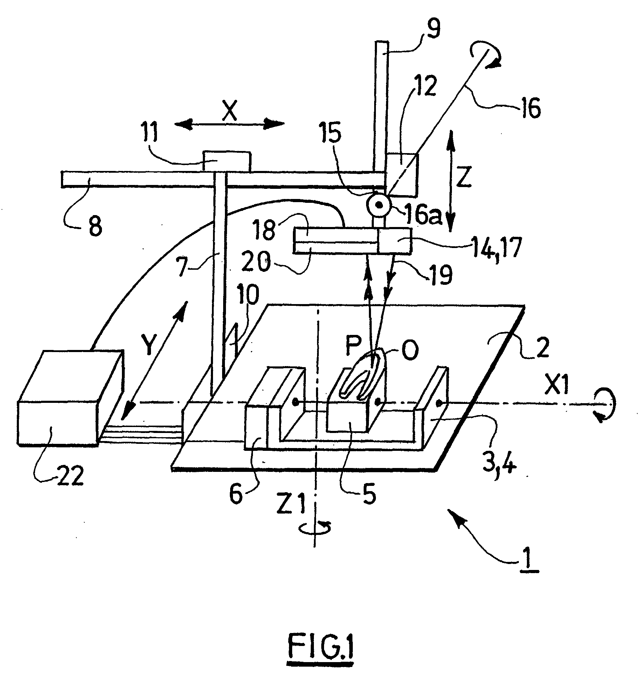

A la figure 1, le dispositif de mesure 1 comporte une table 2 horizontale ou un bâti de support d'une platine 3 prévue pour y immobiliser l'objet O à mesurer.

La platine 3 comporte un châssis 4 mobile en rotation autour d'un axe vertical Z1 par rapport à la table et un porte-objet 5 mobile en rotation autour d'un axe X1 horizontal par rapport au châssis 4. Un goniomètre 6 permet de régler d'une manière prescrite les positions angulaires du porte-objet 5 par rapport à la table 2. Les axes X1 et Z1 sont concourants. Bien entendu, la table peut avoir toute autre position, par exemple une position verticale.

Un pilier vertical 7 supportant est monté mobile en translation par rapport à la table 2 suivant une direction Y horizontale perpendiculaire à la direction X1 horizontale. Une traverse 8 est montée mobile en translation dans le sens de sa longueur suivant une direction X horizontale parallèle à la direction X1. Un portique non représenté peut également être prévu sur la table 2 au lieu du pilier 7 et de la traverse 8.

Un bras 9 vertical est monté mobile dans le sens de sa longueur sur la traverse 8 suivant une direction Z verticale parallèle à la direction Z1. Des moyens de déplacement 10, 11, 12 du pilier 7, de la traverse 8 et du bras 9 selon leur degré de liberté respectif Y, X et Z par rapport à la table 2, au pilier 7 et à la traverse 8 sont prévus sur ces derniers. Les moyens de déplacement 10, 11, 12 peuvent être commandés pour obtenir des coordonnées prescrites en X, Y, Z du bras 9 par rapport à la table 2.

Une tête 14 de mesure est montée sur la partie extrême 15 du bras 9, tournée vers la table 2. La tête 14 est articulée en rotation autour d'un axe d'articulation 16 parallèle à la direction Y. Des moyens réglables 16a de déplacement de la position angulaire autour de l'axe 16 de la tête 14 par rapport à la partie extrême 15 du bras 9 sont prévus. Dans d'autres réalisations, non représentées, la tête de mesure est montée fixe sur le bras, tandis que le porte-objet est mobile en rotation autour de trois axes orthonormés. Les trois axes de translation et les trois axes de rotation peuvent également être prévus en partie ou entièrement sur la tête ou sur le porte-objet. Dans d'autres réalisations, non représentées, les axes par rapport auxquels sont effectués les translations et/ou les rotations ne sont pas orthonormés, tout en définissant un système de coordonnées dans l'espace à trois dimensions, permettant toute orientation directionnelle de la tête dans celui-ci.

La tête 14 comporte un émetteur laser 17, par exemple sous forme de diode laser, et un récepteur photosensible 18, par exemple sous forme de diode photosensible. L'émetteur 17 et le récepteur 18 sont fixes l'un par rapport à l'autre. L'émetteur 17 émet un rayon laser focalisé dans une direction 19 fixe par rapport à la tête 14. Le récepteur 18 est apte à transformer le rayon laser réfléchi par l'objet ou passé par celui-ci et reçu en une grandeur représentative d'une dimension. Le récepteur 18 comprend une zone 20 photosensible de réception ayant une certaine étendue, transversale à la direction 19 du rayon laser et tournée vers l'extérieur. Une différence de potentiel ou un courant électrique est produit à la sortie du récepteur 18 en fonction de la partie de la zone 20 de réception, qui est effectivement atteinte par un rayonnement laser. La caractéristique du récepteur grandeur de sortie - coordonnée de la partie de zone 20, atteinte par le rayonnement laser, est déterminée lors d'un étalonnage préalable. L'étendue de la zone 20 de réception est suffisante pour être balayée par le rayon laser réfléchi ou passé par l'objet O à mesurer.

A la figure 1, le rayon laser émis par l'émetteur 17 est dirigé suivant la direction incidente 19 sur le point P de la surface de l'objet O dont la coordonnée doit être mesurée. Le récepteur 18 et l'émetteur 17 sont côte à côte sur la tête. La tête est formée par exemple d'un pointeur laser. La tête est orientée de manière que la zone de réception 18 reçoive le rayon laser réfléchi par l'objet au point P, et que le rayon laser ne soit pas dirigé suivant la normale à la surface de l'objet O au point P. L'incidence du rayon laser sur le point P de la surface de l'objet possède une composante parallèle à la direction suivant laquelle la coordonnée doit être mesurée. Un déplacement de l'objet O par rapport à la tête 14 suivant la direction 19 du rayon incident entraîne ainsi un déplacement de la partie éclairée par le rayon réfléchi sur la zone 20 de réception, provoquant un changement de la grandeur de sortie du récepteur 18.

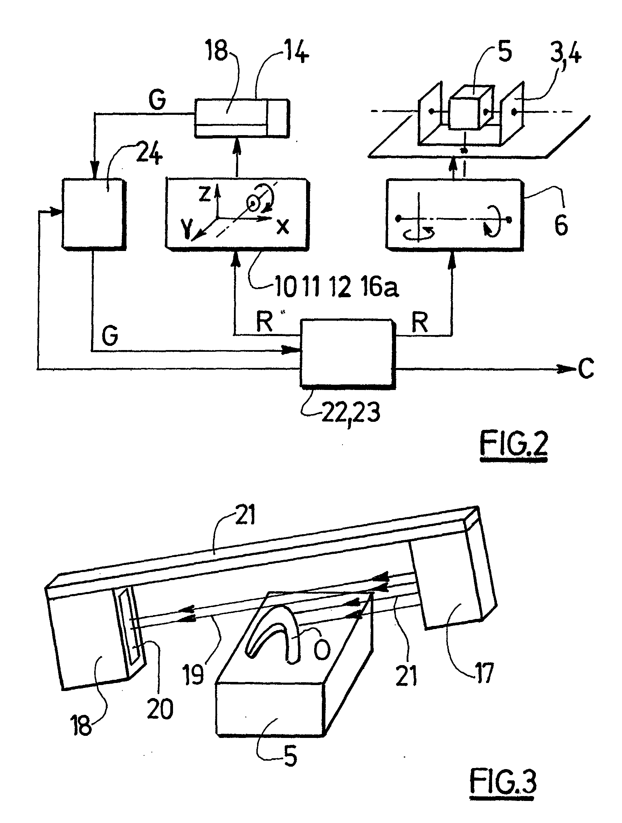

A la figure 3, la tête 14 est agencée de manière que la zone de réception 20 reçoive le rayonnement laser passé par l'objet. L'émetteur 17 et le récepteur 18 se trouvent de part et d'autre de l'objet O à mesurer et du porte-objet 5, et sont immobilisés l'un par rapport à l'autre par l'intermédiaire d'une barrette de fixation à laquelle ils sont fixés et elle-même fixée à la partie extrême 15 du bras 9. L'objet O intercepte une partie de la nappe 21 de rayonnement laser émise par l'émetteur 17 et en laisse passer une autre partie jusqu'à la zone 20 de réception. L'incidence du rayon laser sur le point de la surface de l'objet possède une composante orthogonale à la direction suivant laquelle la coordonnée de l'objet doit être mesurée. Le déplacement de l'objet O et du porte-objet 5 perpendiculairement à la direction 19 d'émission du rayonnement laser provoque un déplacement de la partie de la zone 20 de réception éclairée par celui-ci, provoquant un changement de la grandeur de sortie du récepteur 18.

A la figure 2, des moyens 22 de calcul sont prévus pour déterminer, en fonction de la grandeur fournie par le récepteur 18 et de la position de réglage de la tête 14 de mesure par rapport au porte-objet 5, la coordonnée de la surface de l'objet O au point P. Les moyens 22 de calcul comprennent une unité 23 de traitement prescrivant des positions R de réglage d'une part aux moyens de déplacement 10, 11, 12, 16a de la tête 14 et d'autre part au goniomètre 6 du porte-objet 5, qui se meuvent de manière correspondante. Le récepteur 18 reçoit le rayon laser réfléchi ou passé par l'objet O avec les réglages précédents et fournit en réponse une grandeur G de sortie. La grandeur G de sortie du récepteur 18 est envoyée à une mémoire 24, par exemple une mémoire EPROM ou similaire, où elle est enregistrée. L'unité 23 de traitement lit le contenu de la mémoire tampon 24 pour recueillir la grandeur G de sortie du récepteur 18. L'unité de traitement calcule, pour chaque réglage de la tête 14 et du porte-objet 5, la coordonnée C du point P de la surface de l'objet O, à partir des positions R de réglage mémorisées et de la grandeur G de sortie. La précision des moyens de déplacements 10, 11, 12, 6, 16a et du rayonnement de la tête laser 14 est choisie en rapport avec la précision de mesure souhaitée.

Les opérations précédentes sont répétées pour un nouveau réglage de la tête 14 et du porte-objet 5 l'un par rapport à l'autre, pour déterminer la coordonnée d'un autre point P de la surface de l'objet O ou le cas échéant la coordonnée du même point P suivant une autre direction. La taille de la mémoire 24 permet d'enregistrer par exemple un certain nombre N de grandeurs G de sortie successives, l'unité 23 lisant la mémoire 24 tous les N cycles. L'unité de traitement commande les opérations précédentes pour N réglages.

La commande des réglages des moyens de déplacements 10, 11, 12, 6, 16a est telle que l'objet O soit balayé en continu suivant une trajectoire prescrite, par exemple suivant un plan ou autre, le rayonnement laser se déplaçant sur l'objet O de manière continue dans ce plan. La grandeur G de sortie de la tête 14 est relevée par l'unité 23 de traitement à des instants prescrits, par exemple tous les instants T successifs au cours d'un balayage pour calculer les coordonnées de points P de l'objet O dans le plan de balayage. Plusieurs trajectoires successives de balayage, par exemple des plans successifs, permettent de couvrir une surface de l'objet. Pour gagner encore du temps, les balayages sont effectués en aller-retour d'une extrémité à l'autre de l'objet O, celles-ci étant reconnues par tout moyen approprié.

Au cours d'une opération d'étalonnage préalable, on effectue la mesure de la coordonnée d'un premier point P de la surface de l'objet O. Les mesures suivantes de coordonnées du même objet O pourront alors être effectuées en référence à cette première mesure. Les coordonnées C calculées sont par exemple fournies sous forme d'un tableau de valeurs numériques ou visualisées par un point sur un écran de contrôle, simulant la surface de l'objet.

Les coordonnées C peuvent être une abscisse, une abscisse et une ordonnée, ou une abscisse, une ordonnée et une altitude, selon l'application envisagée.

Les coordonnées C servent par exemple à déterminer la surface - enveloppe de l'objet O mesuré. Elles servent également à vérifier que la surface de l'objet O mesuré reste entre deux surfaces - enveloppes définies par des tolérances dimensionnelles et prescrites ou déterminées à partir de la surface - enveloppe déterminée ou fournie au préalable de la manière précédente. Une pièce peut également être usinée à partir des coordonnées C fournies au préalable. Un moule d'une pièce ayant les coordonnées C prédéterminées peut également être réalisé.

Enfin, le procédé de positionnement d'un ensemble émetteur laser - récepteur va maintenant être décrit.

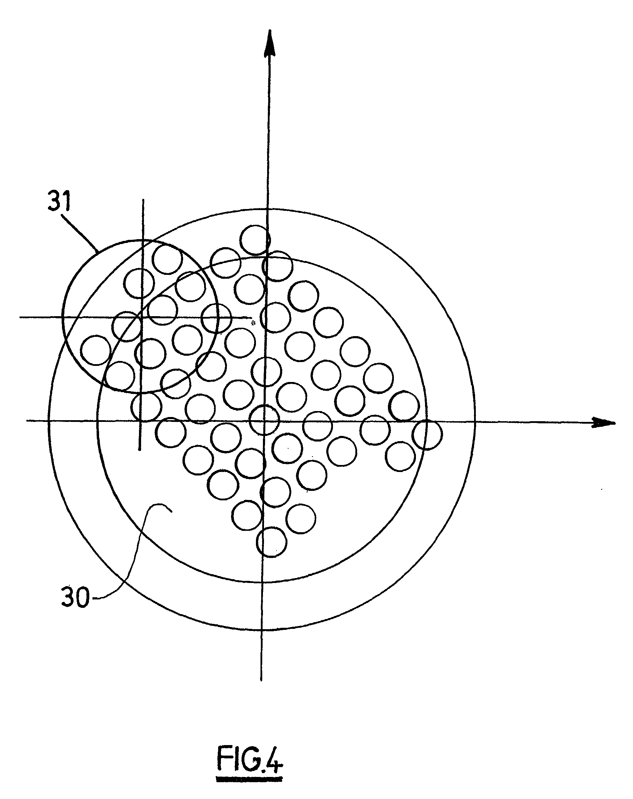

A la figure 4, une section droite d'un faisceau laser est représentée, montrant que le centre du faisceau 30 est décalé par rapport au centre de la zone active 31 du laser.

Les différentes fonctions de scanning, sont directement liées , au niveau de la précision des points acquis, au bon positionnement de la cellule utilisée pour faire cette mesure.

Il est souhaitable, afin de garantir la fiabilité des mesures, de positionner de manière correcte, le spot émis par le laser. Cette opération est très délicate, voir impossible. C'est pourquoi, plutôt que de positionner le spot de manière aléatoire, il est plus judicieux d'apprendre à la cellule où elle doit être positionnée.

Dans le cadre de cet apprentissage, il est nécessaire de positionner la zone « active» du faisceau laser sur une coordonnée connue. Cette coordonnée est le sommet d'une sphère 32 calibrée, dont on connaît parfaitement le diamètre, et d'une sphéricité des plus précises.

Cette sphère 32 peut-être en céramique blanche afin de limiter au maximum les perturbations dues à l'éclat du faisceau.

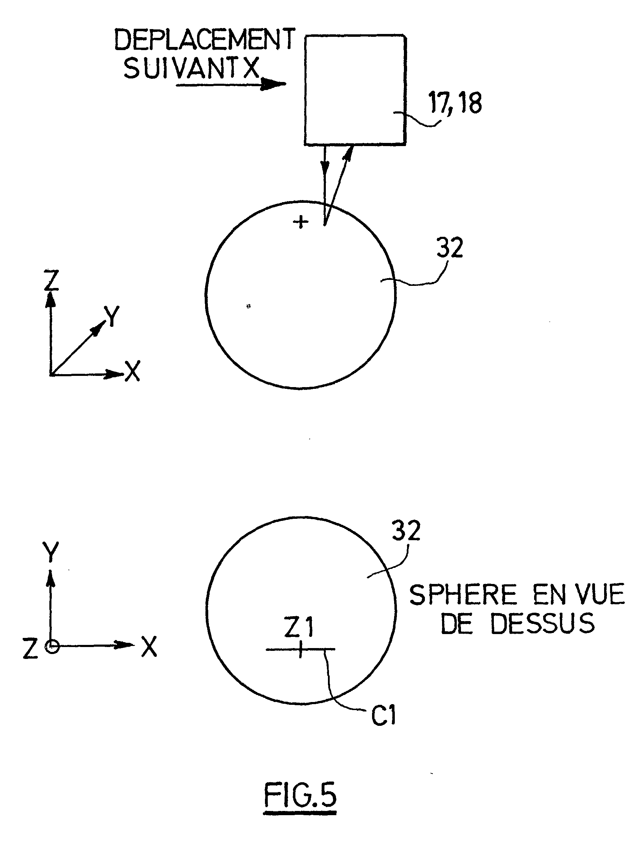

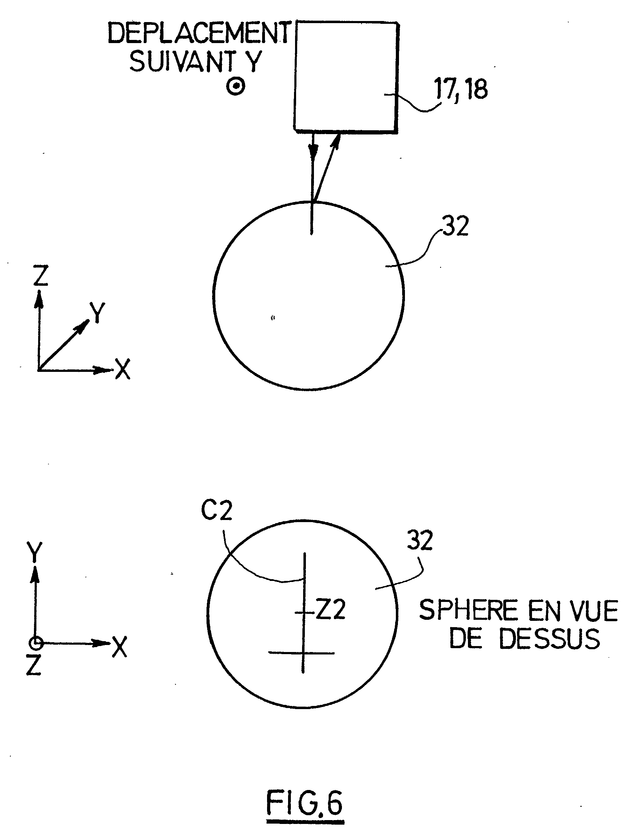

Afin de déterminer avec précision la localisation de la partie « active » du faisceau, il est procédé comme suit:
On mesure un arc de cercle C1, suivant l'axe X (voir figure 5).
   Cette mesure est en fait l'acquisition des différents points de digitalisation constituant l'arc de cercle C1. Ces différents points sont traités via l'informatique de telle façon à satisfaire l'équation d'une "Best Fit" (Equation du cercle avec traitement des résultats par la méthode des moindre carrés par exemple).
   De cette équation, on tire les coordonnées point théorique Z1 ayant sa coordonnée suivant Z au maximum.
Ensuite, on répète cette opération suivant l'axe Y (voir figure 6) en prenant soit de positionner le spot du laser sur le point théorique Z1. Depuis ce point, de la même façon que précédemment, le relevé des coordonnées constituant l'arc C2 est effectué. Les plans supportant C1 et C2 sont nécessairement orthogonaux. Les nouvelles coordonnées récupérées sur C2 sont traitées par la même "Best Fit", et de la même manière les coordonnées du point théorique Z2 sont calculées. Ce point est inévitablement le sommet de la calotte sphérique.
Enfin, on positionne en automatique du faisceau à l'aplomb de ce point Z2 pour mettre en coïncidence, la zone "active" du capteur par rapport au système de coordonnées en présence.

Ces trois étapes franchies, les déplacements machines et laser sont en phase et travaillent suivant le même repère.

En suivant le même procédé de réglage, par mesure successives de différentes sphères, il est possible d'établir avec la plus grande précision un volume de rotation, dont on connaît parfaitement le centre ainsi que le rayon.

Le procédé ainsi décrit s'applique à un pointeur laser constitué d'un seul faisceau laser.

Dans le cas d'une nappe laser (ayant une épaisseur de l'ordre du millimètre par exemple) le procédé de détermination comprend seulement l'étape mise en oeuvre selon l'axe X.

## Revendications

1. Dispositif (1) de détermination d'au moins une coordonnée (C) d'au moins un point (P) de la surface d'un objet (O), comportant
- des premiers moyens (3,4,5) de support d'un objet (O),
- au moins un émetteur (17) laser, apte à émettre au moins un rayon laser vers le point (P) de la surface de l'objet (O),
- au moins un récepteur (18) photosensible orienté vers l'objet (O) et apte à transformer le rayon laser réfléchi par l'objet (O) ou passé par celui-ci et reçu en une grandeur (G) représentative d'une dimension,
- des deuxièmes moyens (7, 8, 9) de support de l'émetteur (17) laser et du récepteur (18) photosensible,
- des moyens (10, 11, 12, 6, 16a) pour déplacer d'une manière réglable l'ensemble émetteur (17) laser - récepteur (18) photosensible d'une part et l'objet (O) d'autre part l'un par rapport à l'autre,
- des moyens (22) de calcul de la coordonnée (C) du point (P) de la surface de l'objet (O) en fonction de la grandeur (G) fournie par le récepteur (18) et de la position (R) de réglage des moyens (10, 11, 12, 6, 16a) de déplacement.

2. Dispositif (1) de mesure suivant la revendication 1, **caractérisé en ce que** les moyens (10, 11, 12, 6, 16a) de déplacement sont aptes à régler la position de l'ensemble émetteur (17) laser - récepteur (18) photosensible suivant trois directions orthonormées (X, Y, Z) par rapport à un bâti (2) et comprennent un goniomètre (6) pour le réglage en position de l'objet (O) à mesurer autour de deux axes (X1, Z1) orthogonaux par rapport au bâti (2).

3. Dispositif (1) de mesure suivant la revendication 2, **caractérisé en ce qu'**il est prévu des moyens (16a) pour régler la position (R) angulaire de l'ensemble émetteur (17) laser - récepteur (18) photosensible autour d'un axe (16) de rotation par rapport au bâti (2).

4. Dispositif (1) de mesure suivant la revendication 2 ou 3, **caractérisé en ce que** les axes (X1, Z1) de réglage angulaire du goniomètre (6) sont concourants en un même centre.

5. Dispositif (1) de mesure suivant l'une quelconque des revendications précédentes, **caractérisé en ce que** le récepteur (18) photosensible comprend une diode photosensible dont la zone (20) de réception de rayonnement laser possède une étendue suffisante pour être balayée par le rayon laser réfléchi ou passé par l'objet (O) à mesurer et fournissant en sortie une différence de potentiel ou de courant électrique fonction du rayonnement reçu dans la zone (20) de réception.

6. Dispositif (1) de mesure suivant l'une quelconque des revendications précédentes, **caractérisé en ce que** l'ensemble émetteur (17) laser - récepteur (18) photosensible est agencé de manière que l'incidence (19) du rayon laser sur le point (P) de la surface de l'objet (O) possède une composante parallèle à la direction suivant laquelle la coordonnée (C) doit être déterminée et que le récepteur (18) photosensible reçoive le rayon laser réfléchi par l'objet (O).

7. Dispositif (1) de mesure suivant l'une quelconque des revendications précédentes, **caractérisé en ce que** l'ensemble émetteur (17) laser - récepteur (18) photosensible est agencé de manière que l'incidence (19) du rayon laser sur le point (P) de la surface de l'objet (O) possède une composante orthogonale à la direction suivant laquelle la coordonnée (C) de l'objet (O) doit être déterminée et que le récepteur (18) photosensible reçoive le rayon laser passé par l'objet (O).

8. Dispositif (1) de mesure suivant l'une quelconque des revendications précédentes, **caractérisé en ce que** les moyens (22) de calcul comprennent une unité (23) de traitement apte à commander en continu des positions (R) de réglages des moyens (10, 11, 12, 6, 16a) de déplacement, à recueillir en continu la grandeur (G) fournie par le récepteur (18) et à calculer à partir de ces positions (R) de réglage et des grandeurs (G) fournies une coordonnée (C) de point (P) de la surface de l'objet (O) pour chaque réglage.

9. Dispositif (1) de mesure suivant la revendication 8, **caractérisé en ce qu'**une mémoire (24) est prévue entre le récepteur (18) photosensible et l'unité (23) de traitement pour stocker les grandeurs (G) fournies par le récepteur (18) photosensible.

10. Procédé de détermination d'au moins une coordonnée (C) d'au moins un point (P) de la surface d'un objet (O), dans lequel
- on règle d'une manière prescrite la position (R) l'un par rapport à l'autre d'un ensemble émetteur (17) laser - récepteur (18) photosensible d'une part et de l'objet (O) à mesurer d'autre part,
- on émet au moins un rayon laser vers le point (P) de la surface de l'objet (O) par l'émetteur (17) laser,
- on transforme par un récepteur (18) photosensible orienté vers l'objet (O) le rayon laser réfléchi ou passé par l'objet (O) et reçu en une grandeur (G) représentative d'une dimension,
- on calcule la coordonnée (C) du point (P) de la surface de l'objet (O) en fonction de la grandeur (G) représentative et de la position (R) de réglage prescrite l'un par rapport à l'autre de l'ensemble émetteur (17) laser - récepteur (18) photosensible d'une part et de l'objet (O) à mesurer d'autre part.

11. Procédé de mesure suivant la revendication 10, **caractérisé en ce que** l'on étalonne au préalable le récepteur (18) photosensible afin de déterminer sa courbe de dimension correspondant à la grandeur (G) fournie par celui-ci.

12. Procédé de mesure selon l'une quelconque des revendications 10 et 11, **caractérisé en ce que** l'on règle la position (R) de l'ensemble émetteur (17) laser - récepteur (18) photosensible suivant trois directions orthonormées (X, Y, Z) ainsi que sa position (R) angulaire autour d'un axe (16) de rotation et l'on règle la position (R) angulaire de l'objet (O) à mesurer autour de deux axes (X1, Z1) orthogonaux.

13. Procédé de mesure selon l'une quelconque des revendications 10 à 12, **caractérisé en ce que** l'on oriente l'ensemble émetteur (17) laser - récepteur (18) photosensible de manière que l'incidence (19) du rayon laser sur le point (P) de la surface de l'objet (O) possède une composante parallèle à la direction suivant laquelle la coordonnée (C) de l'objet (O) doit être déterminée et que le récepteur (18) photosensible reçoive le rayon laser réfléchi par l'objet (O).

14. Procédé de mesure selon l'une quelconque des revendications 10 à 12, **caractérisé en ce que** l'on oriente l'ensemble émetteur (17) laser - récepteur (18) photosensible de manière que l'incidence (19) du rayon laser sur le point (P) de la surface de l'objet (O) possède une composante orthogonale à la direction suivant laquelle la coordonnée (C) de l'objet (O) doit être déterminée et que le récepteur (18) photosensible reçoive le rayon laser passé par l'objet (O).

15. Procédé de mesure selon l'une quelconque des revendications 10 à 14, **caractérisé en ce que** l'on commande en continu les positions (R) de réglage l'un par rapport à l'autre de l'ensemble émetteur (17) laser - récepteur (18) photosensible et de l'objet (O) à mesurer, on recueille en continu la grandeur (G) fournie par le récepteur (18) et on calcule à partir de ces positions (R) de réglage et des grandeurs (G) fournies une coordonnée (C) d'un point (P) de la surface de l'objet (O) pour chaque réglage.

16. Procédé de mesure selon la revendication 15, **caractérisé en ce que** l'on stocke les grandeurs (G) fournies par le récepteur (18) photosensible avant le calcul de la coordonnée (C) de l'objet (O).

17. Utilisation d'un dispositif (1) de mesure selon l'une quelconque des revendications 1 à 9 ou d'un procédé de mesure selon l'une quelconque des revendications 10 à 16 pour déterminer la surface - enveloppe d'un objet (O).

18. Utilisation d'un dispositif (1) de mesure selon l'une quelconque des revendications 1 à 9 ou d'un procédé de mesure selon l'une quelconque des revendications 10 à 16 pour vérifier que la surface d'un objet (O) reste entre deux surfaces - enveloppes définies par des tolérances dimensionnelles.

19. Utilisation d'un dispositif (1) de mesure selon l'une quelconque des revendications 1 à 9 ou d'un procédé de mesure selon l'une quelconque des revendications 10 à 16 pour usiner une pièce à partir de coordonnées fournies au préalable par le dispositif ou le procédé.

20. Utilisation d'un dispositif (1) de mesure selon l'une quelconque des revendications 1 à 9 ou d'un procédé de mesure selon l'une quelconque des revendications 10 à 16 pour réaliser un moule d'une pièce ayant des coordonnées fournies au préalable par le dispositif ou le procédé.

21. Procédé de positionnement d'un ensemble émetteur laser - récepteur destiné à déterminer au moins une coordonnée (C) d'au moins un point (P) de la surface d'un objet (O) dans un espace à trois dimensions (X, Y, Z), **caractérisé en ce qu'**il comprend les étapes suivantes :
a) prévoir au moins une portion de sphère d'un objet de référence ;
b) placer l'émetteur laser et le récepteur à un endroit choisi ;
c) faire parcourir au spot laser un arc de cercle en déplaçant le faisceau laser suivant l'axe X tout en faisant l'acquisition de coordonnées de points régulièrement échantillonnées sur le parcours dudit spot ;
d) déterminer l'équation d'un cercle théorique correspondant à l'ensemble des points échantillonnés ;
e) déterminer les coordonnées du point théorique Z1 correspondant au point du cercle théorique ayant une coordonnée selon l'axe Z maximale ;
f) répéter les étapes c) à e) en déplaçant le faisceau laser suivant l'axe Y et en faisant passer le spot laser sur le point théorique Z1, ceci afin de déterminer les coordonnées d'un point théorique Z2 formant le point le plus élevé en Z de l'objet de référence ;
g) positionner l'ensemble émetteur laser - récepteur en tenant compte de Z2 et des déplacements du faisceau laser pour déterminer Z2.
